# EUROPÄISCHE PATENTSCHRIFT

(11) **EP 3 458 177 B1**
(45) Veröffentlichungstag und Bekanntmachung des Hinweises auf die Patenterteilung: **29.04.2020**
(21) Anmeldenummer: 17721642.1
(22) Anmeldetag: 03.05.2017
(51) Int. Cl.: B01D 53/04, F02M 25/08, B60K 15/035

(54) **KRAFTSTOFFDAMPFFILTER FÜR EINE TANKENTLÜFTUNGSEINRICHTUNG EINES KRAFTFAHRZEUGS MIT VERBESSERTEN BELADEEIGENSCHAFTEN**
FUEL VAPOR FILTER FOR A TANK VENTILATING DEVICE OF A MOTOR VEHICLE WITH IMPROVED CHARGING PROPERTIES
FILTRE DE VAPEURS DE CARBURANT POUR UN DISPOSITIF D'AÉRATION DE RÉSERVOIR D'UN VÉHICULE AUTOMOBILE PRÉSENTANT DES CARACTÉRISTIQUES DE CHARGEMENT AMÉLIORÉES

(30) Priorität: 20.05.2016 DE 102016208787
(43) Veröffentlichungstag der Anmeldung: 27.03.2019
(73) Patentinhaber: Kautex Textron GmbH & Co. KG, 53229 Bonn (DE)
(72) Erfinder: STELL, Björn, 51429 Bergisch Gladbach (DE); PRÜSER, Manfred, 53359 Rheinbach (DE); HANSONIS, Lars, 53474 Ahrweiler (DE); TREUDT, Volker, 51570 Windeck (DE)
(74) Vertreter: Richly & Ritschel Patentanwälte PartG mbB
(86) Internationale Anmeldenummer: PCT/EP2017/060542
(87) Internationale Veröffentlichungsnummer: WO 2017/198466

(56) Entgegenhaltungen:
- WO-A1-2014/016102
- DE-A1- 4 320 384
- US-A- 4 717 401
- US-A- 5 538 543
- US-A1- 2011 168 025

## Beschreibung

Die vorliegende Erfindung betrifft einen Kraftstoffdampffilter für eine Tankentlüftungseinrichtung eines Kraftfahrzeugs.

Bei einem mittels einer Brennkraftmaschine, insbesondere mittels eines Ottomotors angetriebenen Kraftfahrzeug besteht die Problematik, dass die im Kraftstofftank befindlichen und mit Kohlenwasserstoffen beladenen Dämpfe nicht ohne eine vorhergehende Filterung an die Umgebung des Kraftfahrzeugs abgegeben werden dürfen. Zu diesem Zweck sind in den Kraftfahrzeugen häufig als Aktivkohlefilter ausgebildete Kraftstoffdampffilter vorgesehen, die mittels einer Beladungsöffnung des Kraftstoffdampffilters mit einem Tankvolumen und mittels einer Entlüftungsöffnung des Kraftstoffdampffilters mit der Brennkraftmaschine und/oder mit der Umgebung des Kraftfahrzeugs fluidverbunden sind. Bei Hindurchleiten der aus dem Kraftstofftank entweichenden Dämpfe durch das Kraftstoffdampffilter werden Kohlenwasserstoffe durch das Filtermaterial aufgenommen und/oder adsorbiert, so dass das so gefilterte Gas an die Umgebung abgegeben werden kann. Das mit Kohlenwasserstoffen beladene Filtermaterial wird regelmäßig mittels Ansaugluft der Brennkraftmaschine gespült, so dass mittels des Filtermaterials aufgenommene Kohlenwasserstoffe der Brennkraftmaschine zugeführt werden. Dadurch wird die Aufnahmekapazität des Kraftstoffdampffilters hergestellt.

Bei einer Befüllung eines Kraftstofftanks werden bis zu 60 l/min (Liter pro Minute) Kraftstoff in den Kraftstofftank gefüllt. Folglich muss bei der Betankung ein entsprechend großer Volumenstrom von 60 l/min an mit Kraftstoffdämpfen beladenem Gas durch das Kraftstoffdampffilter geleitet werden. Dabei muss das Kraftstoffdampffilter derart bemessen sein, dass auch bei so hohen Volumenströmen die Kohlenwasserstoffe mittels des Filtermaterials zuverlässig ausgefiltert werden.

Während des Betriebs des Kraftfahrzeugs ist der im Kraftstofftank befindliche Kraftstoff Bewegungen unterworfen, so dass vermehrt Kohlenwasserstoffe in die gasförmige Phase überführt werden, wodurch sich der Innendruck des Kraftstofftanks erhöht. Bei Druckerhöhung oder bei Überschreiten eines vorgegebenen Grenzdrucks muss der Kraftstofftank über das Kraftstoffdampffilter entlüftet werden, wobei Volumenströme in der Größenordnung von 40 l/h (Liter pro Stunde) durch das Kraftstoffdampffilter geleitet werden.

Im Stillstand des Kraftfahrzeugs werden auch aufgrund von thermischen Einflüssen Kohlenwasserstoffe in die gasförmige Phase überführt. In dieser Situation liegt bei der Entlüftung des Kraftstofftanks ein Volumenstrom im Bereich von 0,6 l/h vor.

Ein Kraftstoffdampffilter muss folglich mit sehr unterschiedlichen Entlüftungsvolumenströmen von 0,6 l/h bis zu 60 l/min (also dem sechstausendfachen Entlüftungsvolumenstrom von 0,6 l/h) betrieben werden können.

Bei einem hohen Entlüftungsvolumenstrom von 60 l/min bewegt sich das zu filternde Gas aufgrund seiner großen Bewegungsenergie und seiner Trägheit auf einem annähernd direkten Weg von der Beladungsöffnung hin zur Entlüftungsöffnung des Kraftstoffdampffilters. Folglich wird Filtermaterial, das nicht im Bereich einer direkten Verbindungslinie zwischen der Beladungsöffnung und der Entlüftungsöffnung innerhalb des Kraftstoffdampffilters angeordnet ist, nicht oder nur vermindert mit dem zu filternden Gas beaufschlagt.

Hingegen liegt bei einem niedrigen Entlüftungsvolumenstrom von 0,6 l/h eine gänzlich andere Strömungssituation innerhalb des Kraftstoffdampffilters vor. Denn das zu filternde Gas folgt aufgrund seiner größeren Dichte (verglichen mit nicht mit Kohlenwasserstoffen beladener Luft) der Schwerkraft, so dass das zu filternde Gas zwischen der Beladungsöffnung und der Entlüftungsöffnung lediglich Filtermaterial im Bodenbereich des Kraftstoffdampffilters beaufschlagt. In anderen Bereichen des Kraftstoffdampffilters befindliches Filtermaterial wird hingegen nicht oder nur vermindert mit dem zu filternden Gas beaufschlagt.

Die WO 2014/016102 A1 beschreibt ein Kraftstoffdampffilter mit einem Filtergehäuse, das Dampfspeicherbereiche zur Aufnahme von Filtermaterial aufweist. In dem Gehäuse ist ein Eingangsanschluss und ein Ausgangsanschluss vorgesehen, wobei der Kraftstoffdampffilter über den Ausgangsanschluss mit einer Brennkraftmaschine fluidverbindbar ist. Das Kraftstoffdampffilter weist eine Umlenkeinrichtung auf, über die Gasflusspfäde gebildet sind, durch die das zu filternde Gas strömen muss.

Die DE 43 20 384 A1 beschreibt ein Aktivkohlefilter zur Kraftstofftankentlüftung. Das Aktivkohlefilter weist ein Gehäuse auf, das einen ersten Anschluss, einen zweiten Anschluss und einen dritten Anschluss aufweist. Ferner weist das Gehäuse zumindest zwei Trennwände auf, wobei die Trennwand zwischen dem ersten Anschluss und dem dritten Anschluss angeordnet ist, sodass über den ersten Anschluss in das Gehäuse eingeführtes Gas durch zumindest die Trennwand umgelenkt wird, um aus dem dritten Anschluss aus dem Gehäuse austreten zu können.

Die US 5,538,543 A beschreibt einen Kraftstoffdampffilter mit einem Gehäuse, das einen unterteilten Aufnahmeraum zur Aufnahme von einem Adsorptionsmittel aufweist, wobei die jeweiligen Abschnitte des Aufnahmeraums als untere Kammer, mittlere Kammer und obere Kammer ausgebildet sind. Das Gehäuse weist eine Beladungsöffnung und eine Entlüftungsöffnung auf. Ferner weist das Gehäuse eine zur Atmosphäre hin geöffnete Verbindung auf. Die jeweiligen Abschnitte der Kammer sind durch Trennwände voneinander getrennt, wobei in den Trennwänden jeweils Löcher vorgesehen sind, die winkelversetzt zueinander angeordnet sind, so dass bei einem Beladen des Kraftstoffdampffilters und bei einem Spülen des Kraftstoffdampffilters sich ein zick-zack-förmiger Gaspfad ergibt.

Die US 2011/168025 A1 beschreibt auch einen Kraftstoffdampffilter, das einen Außenbehälter und einen innerhalb des Außenbehälters angeordneten Innenbehälter aufweist, wobei die Längsachsen des Außenbehälters und des Innenbehälters kollinear zueinander verlaufen. Sowohl in dem Innenbehälter als auch in dem Außenbehälter ist ein Adsorptionsmedium in Form von beispielsweise Aktivkohle angeordnet.

Die US 4,717,401 A beschreibt einen Kraftstoffdampffilter mit zwei Anschlüssen. In einen Innenraum des Kraftstoffdampffilters sind Umlenkstrukturen angeordnet, die jeweils stoffschlüssig mit der Innenwandung des Gehäuses verbunden sind. Folglich stellt sich bei einer Beladung und bei einer Spülung des Kraftstoffdampffilters eine zick-zack-förmige Fluidströmung innerhalb des Kraftstoffdampffilters ein.

Der vorliegenden Erfindung liegt die Aufgabe zugrunde, ein verbessertes Kraftstoffdampffilter für eine Tankentlüftungseinrichtung eines Kraftfahrzeugs bereitzustellen, bei dem unabhängig von dem Entlüftungsvolumenstrom das im Kraftstoffdampffilter befindliche Filtermaterial gleichmäßiger und damit effektiver genutzt wird.

Die der vorliegenden Erfindung zugrundeliegende Aufgabe wird durch ein Kraftstoffdampffilter mit den Merkmalen des Anspruchs 1 gelöst. Vorteilhafte Ausgestaltungen des Kraftstoffdampffilters sind in den abhängigen Ansprüchen beschrieben.

Im Genaueren wird die der vorliegenden Erfindung zugrundeliegende Aufgabe durch ein Kraftstoffdampffilter für eine Tankentlüftungseinrichtung eines Kraftfahrzeugs gelöst, wobei das Kraftstoffdampffilter ein Filtergehäuse mit einem Aufnahmeraum zur Aufnahme eines Filtermaterials zum zumindest zeitweisen Binden von Kraftstoffdämpfen aufweist. Dabei weist das Filtergehäuse eine Beladungsöffnung zum Einleiten von Kraftstoffdämpfen in den Aufnahmeraum und eine Entlüftungsöffnung zum Entlüften des Aufnahmeraums auf. Das erfindungsgemäße Kraftstoffdampffilter ist dadurch gekennzeichnet, dass dieses eine im Aufnahmeraum angeordnete Umlenkeinrichtung zum Umlenken eines Fluidstroms zwischen der Beladungsöffnung und der Entlüftungsöffnung aufweist, wobei die Umlenkeinrichtung in einem Bereich zwischen der Beladungsöffnung und der Entlüftungsöffnung oder in einem Bereich zwischen der Beladungsöffnung und einer Durchgangsöffnung eines mit der Entlüftungsöffnung fluidverbundenen Fluidkanals angeordnet ist.

Das erfindungsgemäße Kraftstoffdampffilter bietet den Vorteil, dass eine Wegstrecke, die das mit Kohlenwasserstoffen beladene Gas durch das Kraftstoffdampffilter nehmen muss, um von der Beladungsöffnung des Kraftstoffdampffilters zu der Entlüftungsöffnung des Kraftstoffdampffilters zu gelangen, verlängert ist. Somit wird mittels des erfindungsgemäßen Kraftstoffdampffilters insbesondere bei hohen Entlüftungsvolumenströmen, wie diese beispielsweise bei einem Betankungsvorgang vorliegen, eine verbesserte Filterung der aus dem Kraftstofftank verdrängten und mit Kohlenwasserstoffen beladenen Gase erreicht. Ferner bietet das entsprechend ausgebildete Kraftstoffdampffilter den Vorteil, dass das in dem Filtergehäuse bevorratete Filtermaterial verbessert mit Kraftstoffdämpfen beaufschlagt wird. Somit muss in dem Kraftstoffdampffilter zur Erzielung einer vorgegebenen Aufnahmekapazität weniger Filtermaterial bevorratet werden, so dass das entsprechend ausgebildete Kraftstoffdampffilter kompakt baut.

Die Umlenkeinrichtung ist für den Fluidstrom bestehend aus Kraftstoffdämpfen vorzugsweise nicht fluiddurchlässig. Beispielsweise kann die Umlenkeinrichtung eine Umlenkwandung bzw. eine Umlenkwand aufweisen bzw. als eine Umlenkwandung / Umlenkwand ausgebildet sein. Dabei kann die Umlenkeinrichtung ein oder mehrere ebenflächig ausgebildete oder gekrümmt ausgebildete Wandungselemente aufweisen.

Die Umlenkeinrichtung ist folglich auf einer Verbindungslinie zwischen der Beladungsöffnung und der Entlüftungsöffnung oder zwischen der Beladungsöffnung und der Durchgangsöffnung positioniert.

Vorzugsweise ist die Beladungsöffnung in Einbaulage des Kraftstoffdampffilters in einem oberen Bereich des Filtergehäuses angeordnet. Denn insbesondere bei einer in Einbaulage im oberen Bereich des Filtergehäuses angeordneten Beladungsöffnung wird das zu filternde Gas durch mehr Filtermaterial geleitet, denn das zu filternde Gas folgt nach der Einleitung durch die Beladungsöffnung der Schwerkraft und sinkt zum Filtergehäuseboden. Folglich wird das auf dem Weg zum Filtergehäuseboden befindliche Filtermaterial auch mit Kohlenwasserstoffen beladen, was bei aus dem Stand der Technik bekannten Kraftstoffdampffiltern nicht der Fall ist. Unter dem Filtergehäuseboden ist der tiefste Bereich des Kraftstoffdampffilters in dessen Einbaulauge zu verstehen.

Das Kraftstoffdampffilter kann vorzugsweise als Adsorptionsfilter ausgebildet sein, wobei bei einer entsprechenden Ausbildung des Adsorptionsfilters das Filtermaterial als Adsorptionsmaterial ausgebildet ist. Beispielsweise kann das Kraftstoffdampffilter als Aktivkohlefilter ausgebildet sein, wobei bei einer entsprechenden Ausbildung des Kraftstoffdampffilters das Filtermaterial als Aktivkohle ausgebildet ist, die vorzugsweise in Form eines Granulats im Aufnahmeraum des Filtergehäuses angeordnet ist.

Die Bindung der Kraftstoffdämpfe mittels des Filtermaterials kann durch Adsorption der Kraftstoffdämpfe, also von Kohlenwasserstoffen durch das Filtermaterial erfolgen.

Vorzugsweise ist das Kraftstoffdampffilter derart ausgebildet, die Beladungsöffnung unmittelbar in dem Aufnahmeraum des Filtergehäuses mündet. Das entsprechend ausgebildete Kraftstoffdampffilter bietet den Vorteil, das auch und insbesondere bei kleinen Entlüftungsvolumenströmen eine verbesserte Beladung des in dem Aufnahmeraum befindlichen Filtermaterials mit Kohlenwasserstoffen des durch das Kraftstoffdampffilter geleiteten Kraftstoffdampfs erreicht wird.

Vorzugsweise ist das Kraftstoffdampffilter derart ausgebildet, dass die Umlenkeinrichtung eine senkrecht zu einer Längsachse des Filtergehäuses gerichtete Ausdehnung von zumindest 30% einer lichten Weite des Filtergehäuses aufweist.

Durch eine entsprechende Ausbildung des Kraftstoffdampffilters wird eine nochmals verbesserte Umlenkung der zu filternden Gase durch das Kraftstoffdampffilter erreicht, so dass bei einer vorgegebenen Menge an Filtermaterial eine verbesserte Filterung von Kraftstoffdämpfen durch das Kraftstoffdampffilter erreicht wird. Ferner ist bei einer entsprechenden Ausbildung des Kraftstoffdampffilters mit einer vorgegebenen Filterkapazität diese mit einer verminderten Menge an Filtermaterial erzielbar.

Vorzugsweise beträgt die senkrecht zur Längsachse des Filtergehäuses gerichtete Ausdehnung der Umlenkeinrichtung zumindest 40%. Weiter vorzugsweise beträgt die senkrecht zur Längsachse des Filtergehäuses gerichtete Ausdehnung der Umlenkeinrichtung zumindest 50%. Weiter vorzugsweise beträgt die senkrecht zur Längsachse des Filtergehäuses gerichtete Ausdehnung der Umlenkeinrichtung zumindest 60% oder mehr.

Unter der lichten Weite des Filtergehäuses ist die maximale Durchgangsfläche des Filtergehäuses zu verstehen. Dabei kann die Durchgangsfläche senkrecht zu einer Verbindungslinie zwischen der Beladungsöffnung und der Entlüftungsöffnung oder der Durchgangsöffnung orientiert sein. Bei einem beispielsweise zylindrisch ausgebildeten Filtergehäuse ist die Flächennormale dessen Durchgangsfläche parallel zu einer Längsachse des Filtergehäuses orientiert.

Weiter vorzugsweise ist das Kraftstoffdampffilter derart ausgebildet, dass sich die Umlenkeinrichtung von einer Filtergehäusewand bis zumindest einer Längsachse des Filtergehäuses erstreckt.

Durch eine entsprechende Ausbildung des Kraftstoffdampffilters wird eine nochmals verbesserte Umlenkung der zu filternden Gase zumindest bis hin zur Längsachse durch das Kraftstoffdampffilter erreicht, so dass bei einer vorgegebenen Menge an Filtermaterial eine verbesserte Filterung von Kraftstoffdämpfen durch das Kraftstoffdampffilter erreicht wird. Ferner ist bei einer entsprechenden Ausbildung des Kraftstoffdampffilters mit einer vorgegebenen Filterkapazität diese mit einer verminderten Menge an Filtermaterial erzielbar.

Gemäß einer weiteren vorteilhaften Ausgestaltung des Kraftstoffdampffilters ist dieses derart ausgebildet, dass die Beladungsöffnung und die Entlüftungsöffnung oder die mit der Entlüftungsöffnung mittels des Fluidkanals fluidverbundene Durchgangsöffnung in Einbaulage des Kraftstoffdampffilters in einem oberen Bereich des Filtergehäuses angeordnet sind.

Durch Anordnen der Beladungsöffnung und der Entlüftungsöffnung oder der mit der Entlüftungsöffnung mittels des Fluidkanals fluidverbundene Durchöffnung in Einbaulage des Adsorptionsfilters in dem oberen Bereich des Filtergehäuses werden die Beladungseigenschaften des Adsorptionsfilters insbesondere bei kleinen Entlüftungsvolumenströmen, wie diese im Betrieb und/oder Stillstand des Fahrzeuges vorliegen, erheblich verbessert. Denn das zu filternde Gas fließt bei Einleitung in das Filtergehäuse der Schwerkraft folgend in Richtung eines unteren Bereichs des Filtergehäuses, so dass das in der Bewegungsrichtung des zu filternden Gases befindliche Adsorptionsmaterial zur Filterung genutzt werden kann. Damit das zu filternde Gas aus dem Filtergehäuse über die Entlüftungsöffnung entweichen kann, muss sich das zu filternde Gas im Filtergehäuse in den oberen Bereich des Filtergehäuses fließen, so dass auch das in der Bewegungsrichtung des zu filternden Gases befindliche Adsorptionsmaterial zur Filterung genutzt werden kann. Folglich wird durch eine entsprechende Anordnung der Beladungsöffnung und der Entlüftungsöffnung oder der Durchgangsöffnung die effektive Filterbettlänge vergrößert und mehr Filtermaterial zum Filtern der Kraftstoffdämpfe verwendet. Folglich wird eine nochmals verbesserte Umlenkung der zu filternden Gase durch das Kraftstoffdampffilter erreicht, so dass bei einer vorgegebenen Menge an Filtermaterial eine verbesserte Filterung von Kraftstoffdämpfen durch das Kraftstoffdampffilter erreicht wird. Ferner ist bei einer entsprechenden Ausbildung des Kraftstoffdampffilters mit einer vorgegebenen Filterkapazität diese mit einer verminderten Menge an Filtermaterial erzielbar.

Bei einer entsprechenden Ausbildung des Filtergehäuses beschreibt das zu filternde Gas folglich eine Bewegungsbahn, die einem auf dem Kopf stehenden Omega entspricht.

Gemäß einer weiteren vorteilhaften Ausgestaltung des Kraftstoffdampffilters weist das Filtergehäuse einen Außenbehälter und einen innerhalb des Außenbehälters angeordneten Innenbehälter auf, wobei sowohl der Außenbehälter als auch der Innenbehälter zumindest teilweise mit dem Filtermaterial gefüllt sind, wobei der Innenbehälter mit dem Außenbehälter mittels einer Einlassöffnung des Innenbehälters fluidverbunden ist, und wobei die Beladungsöffnung in dem Außenbehälter mündet und die Entlüftungsöffnung in dem Innenbehälter mündet.

Bei dem entsprechend ausgebildeten Kraftstoffdampffilter ist die Wegstrecke, die das zu filternde Gas durch das Kraftstoffdampffilter zurücklegen muss, um von der Beladungsöffnung zu der Entlüftungsöffnung zu gelangen, nochmals verlängert, so dass eine verbesserte Ausfilterung der Kohlenwasserstoffe aus dem zu filternden Gas erreicht wird.

Die Einlassöffnung des Innenbehälters ist vorzugsweise eine stirnseitige Öffnung des Innenbehälters. Folglich steht die Einlassöffnung des Innenbehälters mit der Entlüftungsöffnung des Innenbehälters in Fluidverbindung. Die Einlassöffnung des Innenbehälters befindet sich vorzugsweise innerhalb eines Außenbehälter-Aufnahmeraums.

Bei einer entsprechenden Ausbildung des Kraftstoffdampffilters ist es möglich, dass die Beladungsöffnung und die Entlüftungsöffnung auf einer gleichen Seite des Kraftstoffdampffilters angeordnet sind. Bei einem zylinderförmig ausgebildeten Kraftstoffdampffilter können die Beladungsöffnung und die Entlüftungsöffnung an einer Stirnseite des Kraftstoffdampffilters angeordnet sein.

Vorzugsweise kann eine Längsachse des Außenbehälters parallel zu einer Längsachse des Innenbehälters verlaufen. Weiter vorzugsweise verlaufen die Längsachsen des Außenbehälters und des Innenbehälters kollinear zueinander.

Das Kraftstoffdampffilter ist dabei vorzugsweise derart ausgebildet, dass dieses einen innerhalb des Außenbehälters angeordneten Halterahmen aufweist, der zumindest eine Durchgangsöffnung aufweist, wobei der Innenbehälter mittels des Halterahmens im Außenbehälter fixiert ist, und wobei ein Innenbehälter-Aufnahmeraum mittels der Durchgangsöffnung des Halterahmens und mittels der Einlassöffnung des Innenbehälters mit einem Außenbehälter-Aufnahmeraum fluidverbunden ist.

Folglich ist die Durchgangsöffnung des mit der Entlüftungsöffnung fluidverbundenen Fluidkanals durch den Halterahmen gebildet. Der Halterahmen weist vorzugsweise eine Halteöffnung auf, in die der Innenbehälter eingeschoben ist. Vorzugsweise ist der Innenbehälter mit dem Halterahmen verschweißt oder auf eine andere geeignete Art und Weise mit diesem verbunden.

Weiter vorzugsweise ist das Kraftstoffdampffilter derart ausgebildet, dass die Umlenkeinrichtung auf einer Außenseite des Innenbehälters oder einer Innenseite des Außenbehälters angeordnet ist.

Das entsprechend ausgebildete Kraftstoffdampffilter weist einen einfachen Aufbau auf, wobei gewährleistet bleibt, dass die effektive Filterlänge bzw. Filterstrecke verlängert ist, so dass unabhängig von den Entlüftungsvolumenströmen stets eine verbesserte Beaufschlagung des Filtermaterials mit den Kraftstoffdämpfen erreicht ist.

Vorzugsweise ist die Umlenkeinrichtung mit dem Innenbehälter oder mit dem Außenbehälter verbunden. Weiter vorzugsweise ist die Umlenkeinrichtung und der Innenbehälter oder die Umlenkeinrichtung und der Außenbehälter einstückig ausgebildet.

Gemäß einer weiteren vorteilhaften Ausbildung des Kraftstoffdampffilters ist die Umlenkeinrichtung spiralförmig ausgebildet.

Bei einer spiralförmigen Umlenkeinrichtung wird die effektive Wegstrecke, die das zu filternde Gas zwischen der Beladungsöffnung und der Entlüftungsöffnung zurücklegen muss, nochmals verlängert. Unabhängig von dem Entlüftungsvolumenstrom wird (annähernd) das gesamte in dem Kraftstoffdampffilter bevorratete Filtermaterial durchströmt, so dass zur Realisierung einer vorgegebenen Aufnahmekapazität weniger Filtermaterial notwendig ist.

Die Zentralachse der spiralförmigen Umlenkeinrichtung verläuft vorzugsweise parallel zu der Längsachse des Filtergehäuses. Weiter vorzugsweise ist die Zentralachse der spiralförmigen Umlenkeinrichtung kollinear zu der Längsachse des Filtergehäuses. Wenn das Filtergehäuse einen Außenbehälter und einen Innenbehälter aufweist, ist die Zentralachse der spiralförmigen Umlenkeinrichtung vorzugsweise parallel, weiter vorzugsweise kollinear zu den Längsachsen des Innenbehälters und des Außenbehälters.

Gemäß einer weiteren vorteilhaften Ausgestaltung des Kraftstoffdampffilters erstreckt sich die Umlenkeinrichtung von einer Außenfläche des Innenbehälters bis zu einer Innenfläche des Außenbehälters.

Durch eine entsprechende Ausbildung des Kraftstoffdampffilters wird ein Bypassen, also ein Überbrücken des Fluidstromes um die Umlenkeinrichtung entgegengewirkt bzw. unterbunden.

Weitere Vorteile, Einzelheiten und Merkmale der Erfindung ergeben sich nachfolgend aus den erläuterten Ausführungsbeispielen. Dabei zeigen im Einzelnen:
- Figur 1:: eine Querschnittsdarstellung eines aus dem Stand der Technik bekannten Kraftstoffdampffilters;
- Figur 2:: eine Querschnittsdarstellung eines erfindungsgemäßen Kraftstoffdampffilters;
- Figur 3:: eine Draufsicht auf Halterahmen des Kraftstoffdampffilters;
- Figur 4:: eine perspektivische Darstellung auf einen weiteren Halterahmen eines Kraftstoffdampffilters einer weiteren Ausführungsform der vorliegenden Erfindung;
- und 5:: eine Querschnittsdarstellung eines Kraftstoffdampffilters gemäß einer weiteren Ausführungsform der vorliegenden Erfindung mit einer eingezeichneten möglichen Entlüftungsströmung innerhalb des Kraftstoffdampffilters
- Figur 6:: eine räumliche Darstellung eines Innenbehälters des in den Figuren 2 und 5 dargestellten Kraftstoffdampffilters; und
- Figur 7:: eine räumliche Darstellung eines Innenbehälters eines Kraftstoffdampffilters gemäß einer weiteren Ausführungsform der vorliegenden Erfindung.

In der nun folgenden Beschreibung bezeichnen gleich Bezugszeichen gleiche Bauteile beziehungsweise gleich Merkmale, so dass eine in Bezug auf eine Figur durchgeführte Beschreibung bezüglich eines Bauteils auch für die anderen Figuren gilt, so dass eine wiederholende Beschreibung vermieden wird. Ferner sind einzelne Merkmale, die in Zusammenhang mit einer Ausführungsform beschrieben sind, auch separat in den anderen Ausführungsformen verwendbar.

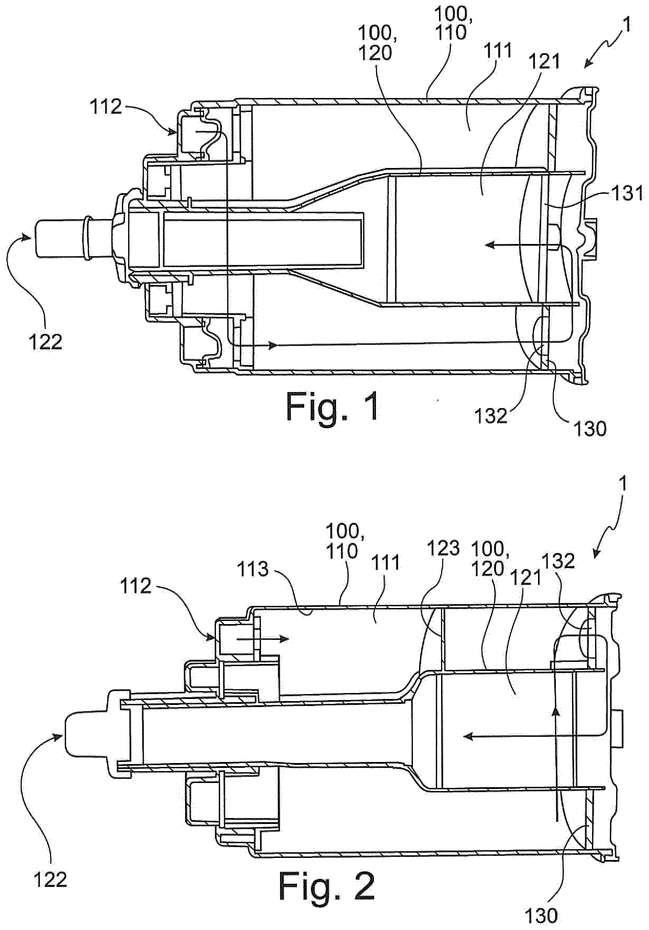

Figur 1 zeigt eine Querschnittsdarstellung eines aus dem Stand der Technik bekannten Kraftstoffdampffilters 1. Es ist ersichtlich, dass eine Beladungsöffnung 112 zum Einleiten von Kraftstoffdämpfen in den Kraftstoffdampffilter 1 in einen Zwischenraum zwischen einem Aufnahmeraum 111 des Kraftstoffdampffilters 1, der zur Aufnahme von Filtermaterial ausgebildet ist, und einer in Figur 1 links dargestellten Außenwand des Kraftstoffdampffilters 1 mündet. Innerhalb dieses Zwischenraums ist kein Filtermaterial angeordnet, sodass bei einem niedrigen Entlüftungsvolumenstrom, wie dieser beispielsweise im Stillstand eines Kraftfahrzeugs vorliegt, das zu filternde Gas innerhalb des Zwischenraumes der Schwerkraft folgend nach unten sinkt, ohne dabei durch Filtermaterial geleitet zu werden.

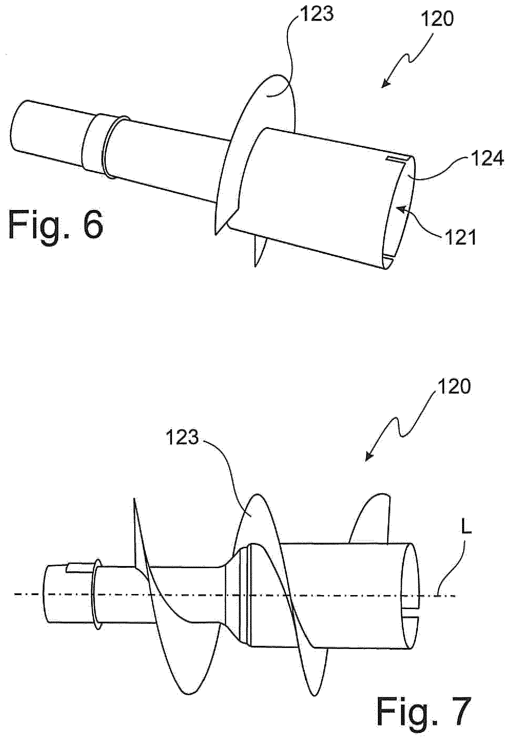

In Figur 2 ist eine Querschnittsdarstellung eines erfindungsgemäßen Kraftstoffdampffilters 1 dargestellt. Das Kraftstoffdampffilter 1 weist ein Filtergehäuse 100 auf, das in dem dargestellten Ausführungsbeispiel einen Außenbehälter 110 und einen innerhalb des Außenbehälters 110 angeordneten Innenbehälter 120 aufweist. Der Außenbehälter 110 weist einen Außenbehälter-Aufnahmeraum 111 auf, der auch als Außenbehälter-Innenraum 111 bezeichnet werden kann, der zur Aufnahme von Filtermaterial ausgebildet ist. Bei dem Filtermaterial kann es sich beispielsweise um Aktivkohle handeln. Der Innenbehälter 120 weist einen Innenbehälter-Aufnahmeraum 121 auf, der auch als Innenbehälter-Innenraum 121 bezeichnet werden kann, der ebenfalls zur Aufnahme von Filtermaterial ausgebildet ist. Der Innenbehälter 120 ist mit dem Außenbehälter 110 über eine Einlassöffnung 124 (siehe Figur 6) des Innenbehälters 120 fluidverbunden, wobei aus Figur 2 ersichtlich ist, dass die Einlassöffnung 124 innerhalb des Außenbehälter-Aufnahmeraums 111 positioniert ist.

Zum Einleiten von Kraftstoffdämpfen in das Kraftstoffdampffilter 1 weist dieses eine Beladungsöffnung 112 auf, die in den Außenbehälter 110 in dessen in Einbaulage oberen Bereich mündet. Ferner weist das Kraftstoffdampffilter 1 zum Ausleiten der gefilterten Gase eine Entlüftungsöffnung 122 auf, die in den Innenbehälter 120 mündet.

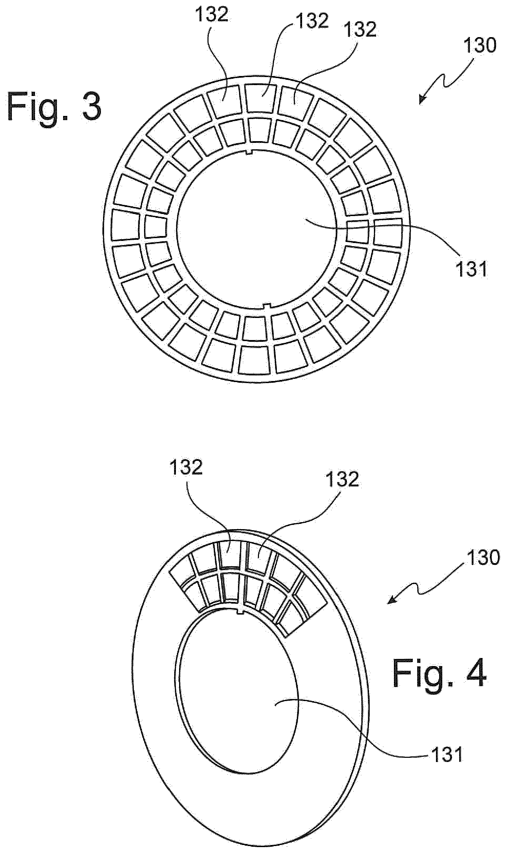

Aus Figur 2 ist ersichtlich, dass der Innenbehälter 120 innerhalb des Außenbehälters 110 mittels eines innerhalb des Außenbehälters 110 angeordneten Halterahmen 130 gehalten ist. Dabei ist der Innenbehälter 120 mit dem Halterahmen 130 vorzugsweise verschweißt. Aus den Figuren 3 und 4, die jeweils einen Halterahmen 130 in Alleinstellung darstellen, ist ersichtlich, dass der Halterahmen 130 zum Halten des Innenbehälters 120 eine Halteöffnung 131 aufweist. Ein Halten bzw. Fixieren des Innenbehälters 120 innerhalb des Außenbehälters 110 erfolgt durch Einschieben des Innenbehälters 120 in die Halteöffnung 131 des Halterahmens 130.

Wie aus den Figuren 3 und 4 ersichtlich ist, weist der Halterahmen 130 eine Vielzahl von Durchgangsöffnungen 132 auf. Der Außenbehälter-Aufnahmeraum 111 ist über die Durchgangsöffnungen 132 des Halterahmens 130 und die Einlassöffnung 124 des Innenbehälters 120 mit dem Innenbehälter-Aufnahmeraum 121 fluidverbunden.

Der Strömungsweg, den in den Kraftstoffdampffilter 1 eingeleitete Kraftstoffdämpfe zu durchlaufen haben, beginnt folglich bei der Beladungsöffnung 112, durch die die Kraftstoffdämpfe in den Innenbehälter-Aufnahmeraum 111 eingeleitet werden. Nach Durchströmen des Außenbehälter-Aufnahmeraums 111 werden die Kraftstoffdämpfe durch die Durchgangsöffnungen 132 des Halterahmens 130 in einen Fluidkanal geleitet, der zwischen dem Außenbehälter-Aufnahmeraum 111 und dem Innenbehälter-Aufnahmeraum 121 angeordnet ist. Dieser Fluidkanal ist über die Einlassöffnung 124 des Innenbehälters 120 mit dem Innenbehälter-Aufnahmeraum 121 fluidverbunden. Nach Durchströmen des Innenbehälter-Aufnahmeraums 121 können die durch das innerhalb des Außenbehälter-Aufnahmeraums 111 und innerhalb des Innenbehälter-Aufnahmeraum 121 angeordneten Filtermaterial gefilterten Gase aus der Entlüftungsöffnung 122 aus dem Kraftstoffdampffilter 1 ausgeleitet werden.

Aus Figur 2 ist ferner ersichtlich, dass die Beladungsöffnung 112 unmittelbar in den Außenbehälter-Aufnahmeraum 111 mündet. Durch eine entsprechende direkte Einleitung der Kraftstoffdämpfe in den Aufnahmeraum 111 des Kraftstoffdampffilters 1 wird insbesondere bei geringen Entlüftungsvolumenströmen, wie diese beispielsweise im Stillstand eines Kraftfahrzeugs bei der Entlüftung eines Kraftstofftanks vorliegen, ein verlängerter Filterweg für die zu filternden Gase ermöglicht. Denn bei der in Figur 2 dargestellten Einbaulage des Kraftstoffdampffilters 1 folgen die Kraftstoffdämpfe bei geringen Entlüftungsvolumenströmen der Schwerkraft und sinken zu dem in Figur 2 unten dargestellten Gehäuseboden des Kraftstoffdampffilters 1. Bereits bei dem Herabsinken der Kraftstoffdämpfe durchlaufen diese innerhalb des Aufnahmeraums 111 angeordnetes Filtermaterial, sodass dieser Weg von der Beladungsöffnung 112 hin zum Gehäuseboden des Kraftstoffdampffilters 1 zur Filterung der Kraftstoffdämpfe genutzt werden kann.

Aus Figur 2 ist ferner ersichtlich, dass das Kraftstoffdampffilter 1 eine Umlenkeinrichtung 123 zum Umlenken eines Fluidstroms aufweist. Bei dem dargestellten Ausführungsbeispiel in Figur 2 ist die Umlenkeinrichtung 123 als mit dem Innenbehälter 120 verbundene Umlenkwand 123 ausgebildet. Die Umlenkwand 123 ist zwischen der Beladungsöffnung 112 und den im oberen Bereich des Kraftstoffdampffilters 1 angeordneten Durchlassöffnungen 132 des Halterahmens 130 angeordnet. Somit wird bei einem großen Entlüftungsvolumenstrom, wie dieser beispielsweise bei einem Betankungsvorgang vorliegt, ein Durchströmen des Aufnahmeraums 111 auf direktem Wege von der Beladungsöffnung 112 hin zu den Durchgangsöffnungen 132 verhindert.

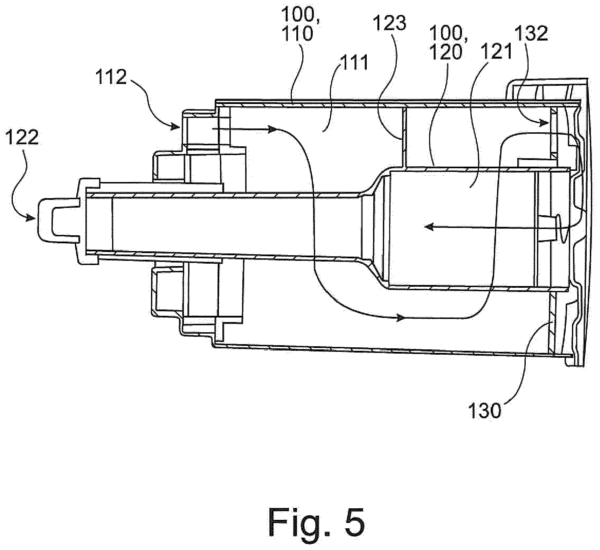

In Figur 5 ist ein Strömungsweg der Kraftstoffdämpfe durch das Kraftstoffdampffilter 1 dargestellt. Es ist ersichtlich, dass der Durchströmungsweg nicht auf direktem Wege von der Beladungsöffnung 112 zu den Durchgangsöffnungen 132 des Halterahmens 130 führt. Vielmehr müssen die Kraftstoffdämpfe nach Einleitung in den Außenbehälter-Aufnahmeraum 111 über die Beladungsöffnung 112 in einen unteren Bereich des Kraftstoffdampffilters 1 (in Einbaulage des Kraftstoffdampffilters 1) strömen, woraufhin nach dem Passieren der Umlenkwand 123 die Kraftstoffdämpfe wieder in einen in Einbaulage oberen Bereich des Kraftstoffdampffilters 1 fließen müssen, um durch die Durchgangsöffnungen 132 zu strömen, woraufhin die Kraftstoffdämpfe über die Einlassöffnung 124 in den Innenbehälter-Aufnahmeraum 121 geleitet werden.

Bei dem in den Figuren 2 und 5 dargestellten Kraftstoffdampffilter 1 ist der in Figur 4 dargestellte Halterahmen 130 verbaut. Der in Figur 4 dargestellte Halterahmen 130 unterscheidet sich von dem in Figur 3 dargestellten Halterahmen 130 dadurch, dass die Durchgangsöffnungen 132 lediglich in einem in Einbaulage des Kraftstoffdampffilters 1 oberen Bereich des Halterahmens 130 angeordnet sind. Hierdurch wird der in Figur 5 dargestellte Durchströmungsweg der Kraftstoffdämpfe erreicht.

In Figur 7 ist ein Innenbehälter 120 eines Kraftstoffdampffilters 1 gemäß einer weiteren Ausführungsform in Alleinstellung dargestellt. Die Umlenkeinrichtung 123 ist dabei spiralförmig ausgebildet und auf einer Außenseite des Innenbehälters 120 angeordnet. Durch eine entsprechende spiralförmige Ausbildung der Umlenkeinrichtung 123 wird erreicht, dass bei Durchströmen des Außenbehälter-Innenraums 111 die zu filternden Kraftstoffdämpfe einen längeren Weg von der Beladungsöffnung 112 zu den Durchgangsöffnungen 132 durchlaufen müssen, sodass eine effektivere Filterung der Kraftstoffdämpfe durch das Filtermaterial erreicht wird. Bei dem dargestellten Ausführungsbeispiel ist eine Zentralachse L bzw. Längsachse L der spiralförmigen Umlenkeinrichtung 123 kollinear zu einer Längsachse des Außenbehälters 110 und einer Längsachse L des Innenbehälters 120 ausgerichtet.

### Bezugszeichenliste:

- 1: Kraftstoffdampffilter
- 100: Filtergehäuse
- 110: Außenbehälter (des Filtergehäuses)
- 111: Aufnahmeraum (des Filtergehäuses) / Außenbehälter-Aufnahmeraum / Außenbehälter-Innenraum
- 112: Beladungsöffnung (des Filtergehäuses)
- 113: Filtergehäusewand (des Außenbehälters)
- 120: Innenbehälter (des Filtergehäuses)
- 121: Aufnahmeraum (des Filtergehäuses) / Innenbehälter-Aufnahmeraum / Innenbehälter-Innenraum
- 122: Entlüftungsöffnung (des Filtergehäuses)
- 123: Umlenkeinrichtung / Umlenkwandung / Umlenkwand
- 124: Einlassöffnung (des Innenbehälters)
- 130: Halterahmen
- 131: Halteöffnung (des Halterahmens)
- 132: Durchgangsöffnung (des Halterahmens)
- L: Längsachse (des Filtergehäuses, des Außenbehälters, des Innenbehälters

## Patentansprüche

1. Kraftstoffdampffilter (1) für eine Tankentlüftungseinrichtung eines Kraftfahrzeugs, wobei das Kraftstoffdampffilter (1) folgende Merkmale aufweist:
- das Kraftstoffdampffilter (1) weist ein Filtergehäuse (100; 110, 120) mit einem Aufnahmeraum (111, 121) zur Aufnahme eines Filtermaterials zum zumindest zeitweisen Binden von Kraftstoffdämpfen auf;
- das Filtergehäuse (100; 110, 120) weist eine Beladungsöffnung (112) zum Einleiten von Kraftstoffdämpfen in den Aufnahmeraum (111, 121) und eine Entlüftungsöffnung (122) zum Entlüften des Aufnahmeraums (111, 121) auf;
- das Kraftstoffdampffilter (1) weist eine im Aufnahmeraum (111, 121) angeordnete Umlenkeinrichtung (123) zum Umlenken eines Fluidstroms zwischen der Beladungsöffnung (112) und der Entlüftungsöffnung (122) auf; und
- die Umlenkeinrichtung (123) ist in einem Bereich zwischen der Beladungsöffnung (112) und der Entlüftungsöffnung (122) oder in einem Bereich zwischen der Beladungsöffnung (112) und einer Durchgangsöffnung (132) eines mit der Entlüftungsöffnung (122) fluidverbundenen Fluidkanals angeordnet,
wobei das Kraftstoffdampffilter (1) durch folgende Merkmale **gekennzeichnet** ist:
- das Filtergehäuse (100; 110, 120) weist einen Außenbehälter (110) und einen innerhalb des Außenbehälters (110) angeordneten Innenbehälter (120) auf, wobei sowohl der Außenbehälter (110) als auch der Innenbehälter (120) zumindest teilweise mit dem Filtermaterial gefüllt sind;
- der Innenbehälter (120) ist mit dem Außenbehälter (110) mittels einer Einlassöffnung (124) des Innenbehälters (120) fluidverbunden;
- die Beladungsöffnung (112) mündet in dem Außenbehälter (110) und die Entlüftungsöffnung (122) mündet in dem Innenbehälter (120); und
- die Umlenkeinrichtung (123) ist auf einer Außenseite des Innenbehälters (120) oder einer Innenseite des Außenbehälters (110) angeordnet.

2. Kraftstoffdampffilter (1) nach Anspruch 1, **dadurch gekennzeichnet, dass** die Umlenkeinrichtung (123) eine senkrecht zu einer Längsachse (L) des Filtergehäuses (100; 110, 120) gerichtete Ausdehnung von zumindest 30 % einer lichten Weite des Filtergehäuses (100; 110, 120) aufweist.

3. Kraftstoffdampffilter (1) nach einem der vorhergehenden Ansprüche, **dadurch gekennzeichnet, dass** sich die Umlenkeinrichtung (123) von einer Filtergehäusewand (113) bis zumindest einer Längsachse (L) des Filtergehäuses (100; 110, 120) erstreckt.

4. Kraftstoffdampffilter (1) nach einem der vorhergehenden Ansprüche, **dadurch gekennzeichnet, dass** die Beladungsöffnung (112) und die Entlüftungsöffnung (122) oder die mit der Entlüftungsöffnung (122) mittels des Fluidkanals fluidverbundene Durchgangsöffnung (132) in Einbaulage des Kraftstoffdampffilters (1) in einem oberen Bereich des Filtergehäuses (100; 110, 120) angeordnet sind.

5. Kraftstoffdampffilter (1) nach einem der vorhergehenden Ansprüchen, **gekennzeichnet durch** die folgenden Merkmale:
- das Kraftstoffdampffilter (1) weist einen innerhalb des Außenbehälters (110) angeordneten Halterahmen (130) auf, der zumindest eine Durchgangsöffnung (132) aufweist;
- der Innenbehälter (120) ist mittels des Halterahmens (130) im Außenbehälter (110) fixiert; und
- ein Innenbehälter-Aufnahmeraum (121) ist mittels der Durchgangsöffnung (132) des Halterahmens (130) und mittels der Einlassöffnung (124) des Innenbehälters (120) mit einem Außenbehälter-Aufnahmeraum (111) fluidverbunden.

6. Kraftstoffdampffilter (1) nach einem der vorhergehenden Ansprüche, **dadurch gekennzeichnet, dass** die Umlenkeinrichtung (123) spiralförmig ausgebildet ist.

7. Kraftstoffdampffilter (1) nach Anspruch 5, **dadurch gekennzeichnet, dass** sich die Umlenkeinrichtung (123) von einer Außenfläche des Innenbehälters (120) bis zu einer Innenfläche des Außenbehälters (110) erstreckt.

## Claims

1. A fuel vapor filter (1) for a tank ventilation device of a motor vehicle, wherein the fuel vapor filter (1) has the following features:
- the fuel vapor filter (1) has a filter housing (100; 110, 120) with a receiving space (111, 121) for receiving a filter material for at least temporarily binding fuel vapors;
- the filter housing (100; 110, 120) has a charging opening (112) for the introduction of fuel vapors into the receiving space (111, 121) and a ventilation opening (122) for the ventilation of the receiving space (111, 121);
- the fuel vapor filter (1) has a diverting device (123) which is arranged in the receiving space (111, 121) and which serves for diverting a fluid flow between the charging opening (112) and the ventilation opening (122); and
- the diverting device (123) is arranged in a region between the charging opening (112) and the ventilation opening (122) or in a region between the charging opening (112) and a passage opening (132) of a fluid channel fluidically connected to the ventilation opening (122),
wherein the fuel vapor filter (1) is **characterized by** the following features:
- the filter housing (100; 110, 120) has an outer container (110) and an inner container (120) arranged within the outer container (110), wherein both the outer container (110) and the inner container (120) are at least partially filled with the filter material;
- the inner container (120) is fluidically connected to the outer container (110) by means of an inlet opening (124) of the inner container (120);
- the charging opening (112) opens into the outer container (110) and the ventilation opening (122) opens into the inner container (120); and
- the diverting device (123) is arranged on an outer side of the inner container (120) or on an inner side of the outer container (110).

2. The fuel vapor filter (1) as claimed in claim 1, **characterized in that** the diverting device (123) has an extent, directed perpendicular to a longitudinal axis (L) of the filter housing (100; 110, 120), of at least 30% of a clear width of the filter housing (100; 110, 120).

3. The fuel vapor filter (1) as claimed in any of the preceding claims, **characterized in that** the diverting device (123) extends from a filter housing wall (113) to at least a longitudinal axis (L) of the filter housing (100; 110, 120).

4. The fuel vapor filter (1) as claimed in any of the preceding claims, **characterized in that** the charging opening (112) and the ventilation opening (122), or the passage opening (132) fluidically connected to the ventilation opening (122) by means of the fluid channel, are arranged in an upper region of the filter housing (100; 110, 120) in an installed position of the fuel vapor filter (1).

5. The fuel vapor filter (1) as claimed in any of the preceding claims, **characterized by** the following features:
- the fuel vapor filter (1) has a holding frame (130) which is arranged within the outer container (110) and which has at least one passage opening (132);
- the inner container (120) is fixed in the outer container (110) by means of the holding frame (130); and
- an inner container receiving space (121) is fluidically connected by means of the passage opening (132) of the holding frame (130) and by means of the inlet opening (124) of the inner container (120) to an outer container receiving space (111).

6. The fuel vapor filter (1) as claimed in any of the preceding claims, **characterized in that** the diverting device (123) is of spiral-shaped form.

7. The fuel vapor filter (1) as claimed in claim 5, **characterized in that** the diverting device (123) extends from an outer surface of the inner container (120) to an inner surface of the outer container (110).

## Revendications

1. Filtre de vapeurs de carburant (1) pour un dispositif d'aération de réservoir d'un véhicule automobile, le filtre de vapeurs de carburant (1) présentant les caractéristiques suivantes :
- le filtre de vapeurs de carburant (1) comprend un boîtier de filtre (100 ; 110, 120) doté d'un espace de réception (111, 121) pour la réception d'un matériau filtrant pour lier au moins temporairement des vapeurs de carburant ;
- le boîtier de filtre (100 ; 110, 120) comprend une ouverture de chargement (112) pour l'introduction de vapeurs de carburant dans l'espace de réception (111, 121) et une ouverture d'aération (122) pour l'aération de l'espace de réception (111, 121) ;
- le filtre de vapeurs de carburant (1) comprend un dispositif de déviation (123) disposé dans l'espace de réception (111, 121) pour la déviation d'un flux de fluide entre l'ouverture de chargement (112) et l'ouverture d'aération (122) ; et
- le dispositif de déviation (123) est disposé dans une région entre l'ouverture de chargement (112) et l'ouverture d'aération (122) ou dans une région entre l'ouverture de chargement (112) et une ouverture de passage (132) d'un canal de fluide relié fluidiquement à l'ouverture d'aération (122), le filtre de vapeurs de carburant (1) étant **caractérisé par** les caractéristiques suivantes :
- le boîtier de filtre (100 ; 110, 120) comprend un récipient extérieur (110) et un récipient intérieur (120) disposé à l'intérieur du récipient extérieur (110), à la fois le récipient extérieur (110) et le récipient intérieur (120) étant remplis au moins partiellement du matériau filtrant ;
- le récipient intérieur (120) est relié fluidiquement au récipient extérieur (110) au moyen d'une ouverture d'entrée (124) du récipient intérieur (120) ;
- l'ouverture de chargement (112) débouche dans le récipient extérieur (110) et l'ouverture d'aération (122) débouche dans le récipient intérieur (120) ; et
- le dispositif de déviation (123) est disposé sur un côté extérieur du récipient intérieur (120) ou un côté intérieur du récipient extérieur (110).

2. Filtre de vapeurs de carburant (1) selon la revendication 1, **caractérisé en ce que** le dispositif de déviation (123) présente une étendue orientée perpendiculairement à un axe longitudinal (L) du boîtier de filtre (100 ; 110, 120) d'au moins 30 % d'un diamètre intérieur du boîtier de filtre (100 ; 110, 120).

3. Filtre de vapeurs de carburant (1) selon l'une des revendications précédentes, **caractérisé en ce que** le dispositif de déviation (123) s'étend à partir d'une paroi de boîtier de filtre (113) jusqu'à au moins un axe longitudinal (L) du boîtier de filtre (100 ; 110, 120).

4. Filtre de vapeurs de carburant (1) selon l'une des revendications précédentes, **caractérisé en ce que** l'ouverture de chargement (112) et l'ouverture d'aération (122) ou l'ouverture de passage (132) reliée fluidiquement à l'ouverture d'aération (122) au moyen du canal de fluide sont disposées, dans la position d'installation du filtre de vapeurs de carburant (1), dans une région supérieure du boîtier de filtre (100 ; 110, 120).

5. Filtre de vapeurs de carburant (1) selon l'une des revendications précédentes, **caractérisé par** les caractéristiques suivantes :
- le filtre de vapeurs de carburant (1) comprend un cadre de retenue (130) disposé à l'intérieur du récipient extérieur (110), lequel cadre de retenue comprend au moins une ouverture de passage (132) ;
- le récipient intérieur (120) est fixé dans le récipient extérieur (110) au moyen du cadre de retenue (130) ; et
- un espace de réception (121) de récipient intérieur est relié fluidiquement à un espace de réception (111) de récipient extérieur au moyen de l'ouverture de passage (132) du cadre de retenue (130) et au moyen de l'ouverture d'entrée (124) du récipient intérieur (120).

6. Filtre de vapeurs de carburant (1) selon l'une des revendications précédentes, **caractérisé en ce que** le dispositif de déviation (123) est réalisé en forme de spirale.

7. Filtre de vapeurs de carburant (1) selon la revendication 5, **caractérisé en ce que** le dispositif de déviation (123) s'étend à partir d'une surface extérieure du récipient intérieur (120) jusqu'à une surface intérieure du récipient extérieur (110).
